# EUROPEAN PATENT SPECIFICATION

(11) **EP 2 386 900 B1**
(45) Date of publication and mention of the grant of the patent: **08.08.2018**
(21) Application number: 10729197.3
(22) Date of filing: 05.01.2010
(51) Int. Cl.: G02C 13/00, B05C 13/02, G02B 1/10, G02C 7/02, B05C 3/09, B05B 13/02

(54) **LENS HOLDING JIG**
LINSENHALTERUNG
MONTAGE PORTE-LENTILLE

(30) Priority: 09.01.2009 JP 2009003575
(43) Date of publication of application: 16.11.2011
(73) Proprietor: Hoya Corporation, Tokyo 161-8525 (JP)
(72) Inventor: YAJIMA,Eiichi, Tokyo 161-8525 (JP); KONO,Shigetoshi, Tokyo 161-8525 (JP); WATANABE,Jun, Tokyo 161-8525 (JP); SAKURAZAWA,Tsuyoshi, Tokyo 161-8525 (JP); HASHIMOTO,Toshikazu, Tokyo 161-8525 (JP)
(74) Representative: Betten & Resch
(86) International application number: PCT/JP2010/050024
(87) International publication number: WO 2010/079777

(56) References cited:
- EP-A1- 1 547 696
- WO-A1-02/20176
- JP-A- 3 195 021
- JP-A- 4 067 101
- JP-A- 7 234 301
- JP-A- 2006 199 387

## Description

### Technical Field

The present invention relates to a lens holding jig to be used to apply an application liquid to a lens base material and a method of manufacturing a lens base material using the same.

### Background Art

As a lens holding jig to be used to apply an application liquid to a lens base material of a spectacle lens or the like, jigs described in, for example, Japanese Patent Laid-Open Nos. 2001-311914, 2004-268013, 2005-41703, 2008-9327, and 2003-71650 are known.

In the optical component holding jig described in Japanese Patent Laid-Open No. 2001-311914, an arm portion that retains an optical component is formed into a continuous three-dimensional shape conforming to the periphery of the optical component. Retainers are provided at the two ends and the center of the arm portion, respectively, to hold the outer periphery of the optical component at three points.

The lens holding jig described in Japanese Patent Laid-Open No. 2004-268013 includes two side holding portions that hold the two, left and right edges of a lens, and one lower holding portion that holds the lower edge of a cut end surface.

The holding jig disclosed in Japanese Patent Laid-Open No. 2005-41703 provides at least three holding portions on a frame curved into an almost circular shape surrounding the object to be held, like the optical component holding jig disclosed in Japanese Patent Laid-Open No. 2001-311914. These holding portions hold the outer periphery of the object to be held. At least one of the holding portions is attached to the frame via an elastically deformable biasing means.

In the holding jig described in Japanese Patent Laid-Open No. 2008-9327, two lens holding pieces hold one edge of a lens at two points, and one lens holding piece holds the other edge of the lens at one point.

The lens holding jig described in Japanese Patent Laid-Open No. 2003-71650 includes three arms and three holding portions attached to the distal ends of the arms, respectively, like the lens holding jig described in Japanese Patent Laid-Open No. 2004-268013. Two of the holding portions hold the two edges of the cut end surface of a lens, and the remaining one holds the lower edge of the cut end surface. The three arms are formed from wire rods. A biasing force is applied to one of them so to as make it relatively approach the remaining two arms.

Document EP 1 547 696 A1 describes a lens holding jig used for immersing a lens (L) in a liquid by holding the lens (L) at at least three positions that are side holding portions (41, 42) for holding both left and right edges of the lens (L), and at a lower-side holding portion (43) for holding the lower edge of the lens (L). The jig is structured such that the side holding portions (41, 42) each have a letter V-shaped holding portion (404) for holding the edge of the lens and have a vertically extending portion (403) extending downward from the V-shaped holding portion (404) along the edge of the lens (L). Further, a lower-side holding portion (1) is structured so as to have a support plate (11) having at its upper end a cut-out portion (110) for supporting an end edge of a lens (L2), and an auxiliary plate (12) formed in one piece with the support plate (11) at an intersection angle.

### Disclosure of Invention

### Problem to be Solved by the Invention

However, in the holding jigs described in Japanese Patent Laid-Open Nos. 2001-311914, 2004-268013, 2005-41703, and 2008-9327, the application liquid readily collects on the holding portions, and the rate of defectives is high. That is, in these holding jigs, the lens holding surface of the holding portion is formed into a V shape to reduce the contact area with respect to the lens, and holds two edge portions of the cut end surface of the lens at two points. For this reason, when the lens holding surface holds the lens, an almost triangular closed space is formed between the lens holding surface and the cut end surface of the lens. When the lens immersed in the application liquid is pulled up, the closed space forms a portion where the application liquid collects after running down on the lens surface due to gravitation. Especially, in the lower holding portion that holds the lower edge of the lens, the application liquid collects in the closed space without running down, resulting in formation of an uneven film thickness portion of the application liquid. Since many application liquids are added with a leveling agent to form a uniform film on the lens base material, bubbles or films readily form. For this reason, bubbles form in the application liquid collected in the closed space. If the bubbles grow large and burst, or a film of the application liquid formed in the closed space by the surface tension breaks, the droplets stick to the lens surface again to cause an application failure.

In addition, in Japanese Patent Laid-Open Nos. 2001-311914 and 2005-41703, when the holding jig is immersed in the application liquid, a closed space is formed between the lens and the frame. When the holding jig is pulled up, a film of the application liquid is formed in the closed space. If this film breaks and scatters, an application failure like that described above occurs.

In the holding jig described in Japanese Patent Laid-Open No. 2003-71650, the holding portion is formed into a triangular shape to minimize the contact area with respect to the lens, and its apex supports the lens at a point. However, in this holding portion as well, when the holding jig is pulled up from the application liquid, the application liquid runs down on the lens surface and collects on the surface of the holding portion. This causes an application failure, like the holding jigs described in Japanese Patent Laid-Open Nos. 2001-311914, 2004-268013, 2005-41703, and 2008-9327.

The present invention has been made in to solve the above-described conventional problems, and has as its object to provide a lens holding jig whose holding portion for holding a lens has such a shape or structure that prevents an application liquid from collecting so as to allow application in a uniform film thickness and prevent any application failure, and a method of manufacturing a lens base material using the same.

### Means of Solution to the Problem

**The invention is defined in independent claim 1.** In order to achieve the above object, there is provided a lens holding jig comprising a first arm, a second arm, and a third arm disposed on both sides of a lens base material to be held, a first side holding portion and a second side holding portion provided at lower ends of the first arm and the second arm, respectively, to hold left and right edges of a cut end surface of the lens base material, and a lower holding portion provided on the third arm to hold a lower edge of the cut end surface of the lens base material, wherein the lower holding portion comprises support surfaces that support lower edges of the cut end surface of the lens base material at two points, and an application liquid release portion running downward from the support surfaces, and when applying an application liquid to the lens base material, the first side holding portion, the second side holding portion, and the lower holding portion are immersed in the application liquid together with the first arm, the second arm, and the third arm.

Although not part of the invention, a method of manufacturing a lens base material is also shown, comprising the steps of holding a cut end surface of a lens base material using a lens holding jig, applying an application liquid to the lens base material by immersing the lens holding jig holding the lens base material in the application liquid, and solidifying the application liquid applied to the lens base material after withdrawing the lens holding jig from the application liquid.

### Effect of the Invention

In the lens holding jig according to the present invention and the method of manufacturing a lens base material using the same, the application liquid that has run down on the surface of the lens base material under its own weight to the support surfaces of the lower holding portion is released to the application liquid release portion. The application liquid does not collect or form a film in the closed space formed between the support surfaces of the lower holding portion and the cut end surface of the lens base material. This makes it possible to uniform the film thickness of the application liquid sticking to the cut end surface and thus prevent an application failure.

Effects other than these functions and effects of the present invention become apparent from the following description of embodiments and accompanying drawings of this specification.

In a preferred form of the lens holding jig, the lower holding portion is formed from a plate, and has an upper surface forming the support surfaces that support the lower edge of the cut end surface of the lens base material at the two points, and the application liquid release portion formed in at least one of an obverse surface and a reverse surface.

As a preferable form of the application liquid release portion, a vertically long groove, a hole, a combination of a groove and a hole, a projection, and the like are considerable.

When the application liquid release portion is formed from a long groove, a long hole, or a combination of a groove and a hole, working of the groove or hole is easy, and the lower holding portion can be manufactured at a low cost. That is, when the lower holding portion is formed from a plate, the groove or hole is formed using a cutter.

When the application liquid release portion is formed from a projection, the lower holding portion can be manufactured easily at a low cost, like the case of a groove or hole.

A preferred form of a lens holding jig is formed from a wire rod including a main body wire rod portion that forms the application liquid release portion, and lower edge support wire rod portions that support the lower edges of the cut end surface of the lens base material at two points. The main body wire rod portion includes a pair of left and right vertical pieces almost parallel to each other, and a connection piece that connects the lower ends of the vertical pieces. A space proton surrounded by the vertical pieces and the connection piece forms the application liquid release portion. The lower edge support wire rod portions obliquely run upward and outward from the upper ends of the vertical pieces, respectively.

Such a lower holding portion can easily be manufactured by bending a wire rod into a U shape, a V shape, or an angular U shape and making wire rods (lower edge support wire rod portions) obliquely run upward and outward from the upper ends.

In a preferred form of the lens holding jig according to the present invention, the first arm and the second arm are arranged to oppose each other, and at least one of them freely opens/closes and is biased in a closing direction by biasing means.

Since at least one of the first arm and the second arm is biased in the closing direction, the two side holding portions can sandwich the left and right edges of the lens base material, enabling holding in a stable state.

In a preferred form of the lens holding jig and the lens base material manufacturing method of the present invention, the lens base material is immersed in the application liquid to such a depth that forms no closed space with respect to the lens holding jig in the application liquid.

If no closed space is formed in the application liquid between the lens base material and the lens holding jig, the application liquid does not collect or form a film in the closed space upon withdrawing the lens base material from the application liquid. It is therefore possible to prevent any defective without the influence of the collected application liquid on the film thickness of the application liquid applied to the lens surface or the possibility of droplet sticking to the lens surface due to film burst.

In a preferred form of the lens holding jig according to the present invention, the lens base material includes a plastic lens.

### Brief Description of Drawings

Fig. 1 is a front view showing an example of a lens holding jig according to the present invention;
Fig. 2 is a side view of the lens holding jig;
Fig. 3A is a plan view of a lower holding portion;
Fig. 3B is a front view of the lower holding portion;
Fig. 3C is a sectional view of the lower holding portion;
Fig. 4 is a front view showing another example of the lower holding portion;
Fig. 5 is a front view showing still another example of the lower holding portion;
Fig. 6 is a front view showing still another example of the lower holding portion;
Fig. 7A is a plan view showing still another example of the lower holding portion;
Fig. 7B is a front view of the lower holding portion;
Fig. 8 is a front view showing still another example of the lower holding portion;
Fig. 9 is a front view showing still another example of the lower holding portion;
Fig. 10 is a front view showing still another example of the lower holding portion;
Fig. 11A is a plan view showing still another example of the lower holding portion;
Fig. 11B is a front view of the lower holding portion;
Fig. 12 is a front view showing still another example of the lower holding portion;
Fig. 13 is a front view showing still another example of the lower holding portion;
Fig. 14 is a front view showing still another example of the lower holding portion;
Fig. 15A is a front view showing still another example of the lower holding portion; and
Fig. 15B is a plan view of the lower holding portion.

### Best Mode for Carrying Out the Invention

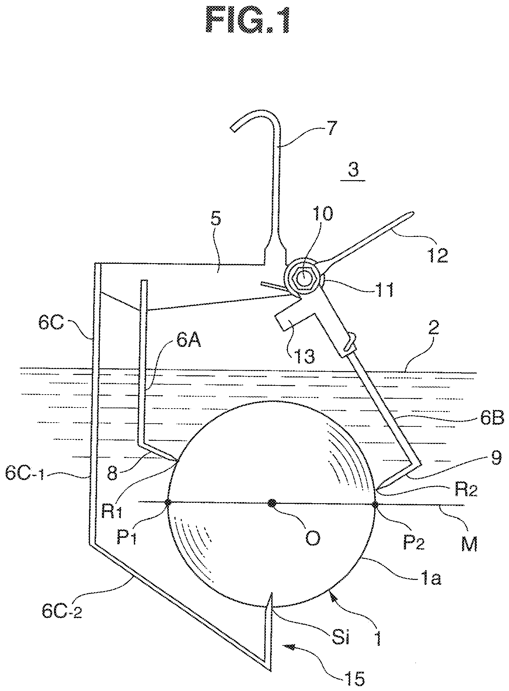

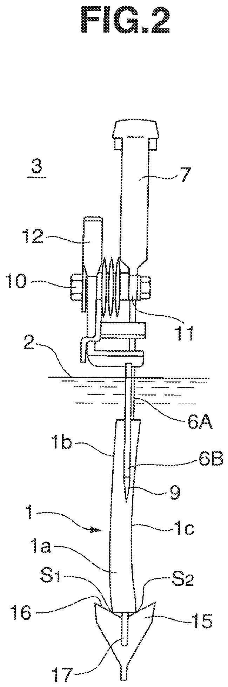

Referring to Figs. 1 and 2, a lens base material 1 is formed from a circular lens (unprocessed lens) made of, for example, a polythiourethane resin and having a refractive index of 1.60, a center thickness of 1.0 mm, a lens diopter of 2.00, and a diameter of 65 to 80 mm. The lens base material 1 is immersed in an application liquid 2 while being almost vertically held by a lens holding jig 3.

As the application liquid 2, for example, a hard coat liquid (Ne = 1.6 available from HOYA) for base material is used and stored in a hard coat tank in an environment of a temperature of 23°C (20°C to 25°C), a humidity of 35% (20% to 50%), and a wind velocity of 0.5 m/min or less.

The lens holding jig 3 includes a holding jig main body 5, and a first arm 6A, a second arm 6B, and a third arm 6C which are attached to the holding jig main body 5. The holding jig main body 5 is formed from a metal plate. An inverted J-shaped hook portion 7 is integrally formed on the upper surface of one end portion so as to project upward.

The first arm 6A, the second arm 6B, and the third arm 6C are disposed to exist in the same vertical plane. The first arm 6A and the third arm 6C are disposed with their upper ends fixed on the left end side of the holding jig main body 5 in Fig. 1. On the other hand, the remaining second arm 6B has its upper end attached to the right end side of the holding jig main body 5. The first arm 6A and the second arm 6B are disposed on both sides of the lens base material 1 so as to almost oppose each other. A first side holding portion 8 and a second side holding portion 9 are integrally formed on the first arm 6A and the second arm 6B, respectively, so hold the two, left and right edges of a cut end surface 1a of the lens base material 1. That is, the first arm 6A and the second arm 6B hold two points P1 and P2 on a horizontal line M passing through a geometric center O of the cut end surface 1a of the lens base material 1 or portions near the points P1 and P2. In this embodiment, the first side holding portion 8 holds a neighboring portion R1 slightly shifted upward from the point P1 of the cut end surface la, whereas the second side holding portion 9 holds a neighboring portion R2 slightly shifted upward from the point P2 of the cut end surface 1a.

The first arm 6A has its upper end fixed to the left end portion of the holding jig main body 5 by welding, soldering, or the like. The first side holding portion 8 of the first arm 6A is obliquely bent downward to point in the direction of the geometric center O of the lens base material 1. The distal end of the first side holding portion 8 is formed into a sharp pin shape to reduce the contact area with respect to the lens base material 1 and thus holds the cut end surface 1a at a point.

On the other hand, the second arm 6B is pivotally supported at its upper end portion within the same vertical plane including the first arm 6A, the second arm 6B, and the third arm 6C by a horizontal support shaft 10 attached to the right end portion of the holding jig main body 5, A twisted coil spring 11 serving as a biasing means applies, to the second arm 6B, a biasing force in the closing direction (clockwise in Fig. 1), that is, in the direction of the first arm 6A. The twisted coil spring 11 is fitted on the support shaft 10 while having one end locked by the holding jig main body 5 and the other end formed on the second arm 6B. An operation lever 12 to be used to open/close the second arm 6B and a stopper 13 which abuts against the lower surface of the holding jig main body 5 to regulate pivotal motion of the second arm 6B in the closing direction integrally project from the upper end side of the second arm 6B. The second side holding portion 9 of the second arm 6B is obliquely bent downward to point in the direction of the geometric center O of the lens base material 1. The distal end of the second side holding portion 9 is formed into a sharp pin shape to reduce the contact area with respect to the lens base material 1 and thus holds the cut end surface 1a at a point.

The third arm 6C is arranged at a distance outside the first arm 6A. The third arm 6C includes a vertical arm portion 6C-1 having its upper end fixed to the left end of the holding jig main body 5 by welding or the like, and a tilted arm portion 6C-2 running obliquely downward from the lower end of the vertical arm portion 6C-1 and having its lower end located almost immediately under the lens base material 1. A lower holding portion 15 that holds the lower edge (lower edges S1 and S2) of the cut end surface 1a of the lens base material 1 at two points is attached to the lower end of the tilted arm portion 6C-2.

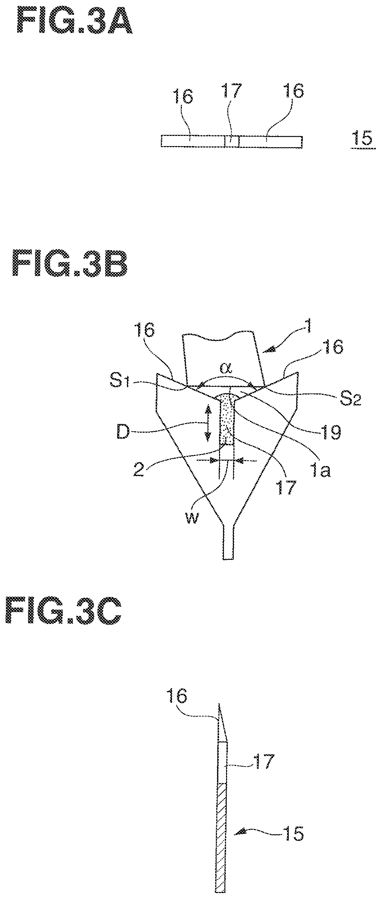

Referring to Figs. 3A to 3C, the lower holding portion 15 is formed from a thin metal piece (plate) having an almost arrowhead shape (inverted triangle shape) in bilateral symmetry when viewed from the front, and fixed almost vertically to the lower end of the third arm 6C while making the obverse and reverse surfaces perpendicular to optical surfaces 1b and 1c of the lens base material 1. The upper surface of the lower holding portion 15 is bent into a V shape so as to form support surfaces 16 that support the lower edges S1 and S2 of the cut end surface 1a of the lens base material 1 at two points. An opening angle α of the support surfaces 16 is about 90° to 120°. As shown in Fig. 3C, the support surfaces 16 are formed into sharp edge shapes to support the lower edges S1 and S2 by the edges.

When the support surfaces 16 of the lower holding portion 15 hold the cut end surface 1a of the lens base material 1, an almost triangular closed space 19 is formed between the cut end surface 1a and the support surfaces 16. The closed space 19 forms a portion where the application liquid 2 collects after running down on the cut end surface 1a from the optical surfaces 1b and 1c of the lens base material 1 to the support surfaces 16 of the lower holding portion 15. If the application liquid 2 collects in the closed space 19, the film thickness of the application liquid applied to the cut end surface 1a of the lens base material 1 becomes uneven, resulting in an application failure.

In the present invention, the lower holding portion 15 has an application liquid release portion 17 to release the application liquid 2 which may otherwise collect in the closed space 19. The application liquid release portion 17 is formed from a vertically long hole formed at the center of the lower holding portion 15 and are open to the obverse and reverse surfaces. The hole has its upper end open to the support surfaces 16 so as to communicate with the closed space 19. The application liquid release portion 17 has a cutting depth D of about 5 to 10 mm and a cutting width W of about 1 to 2 mm.

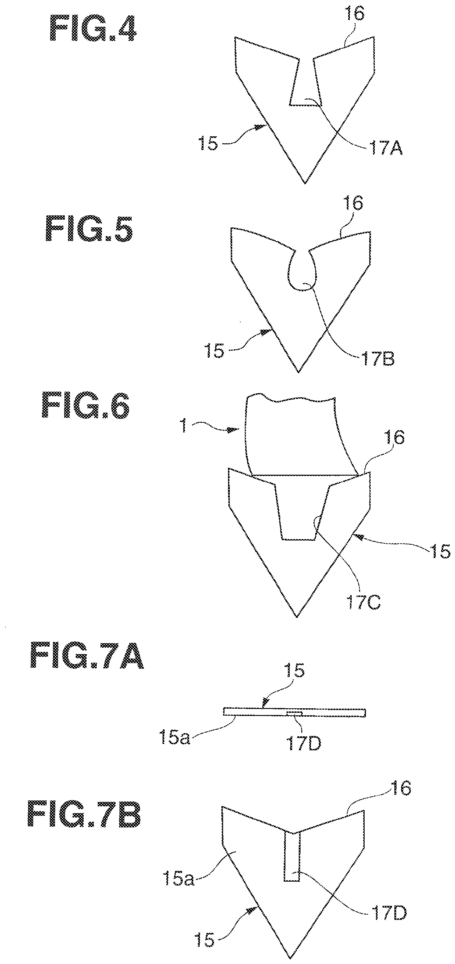

The shape and material of the lower holding portion 15 and the shape of the application liquid release portion 17 are not always specific, and can be changed variously in accordance with the cut end thickness of the lens base material 1, the viscosity of the application liquid 2, and the like. For example, various kinds of lower holding portions 15 as shown in Figs. 4 to 15B are usable.

Fig. 4 illustrates an example in which an application liquid release portion 17A is formed as a long hole having a vertical trapezoidal shape. The other components are almost the same as those of the lower holding portion 15 shown in Figs. 3A to 3C.

Fig. 5 illustrates an example in which an application liquid release portion 17B is formed as a long hole having a vertical elliptical shape, and each support surface 16 is formed into a convex curved surface that projects upward. The other components are almost the same as those of the lower holding portion 15 shown in Figs. 3A to 3C.

Fig. 6 illustrates an example in which an application liquid release portion 17C is formed as a long hole having a vertical inverted trapezoidal shape. This shape is suitably applicable to the minus lens 1 having a thick cut end. The other components are almost the same as those of the lower holding portion 15 shown in Figs. 3A to 3C.

Figs. 7A and 7B illustrate an example in which an application liquid release portion 17D is formed as a vertically long groove formed at the center of one surface, for example, a surface 15a of the lower holding portion 15. The other components are almost the same as those of the lower holding portion 15 shown in Figs. 3A to 3C.

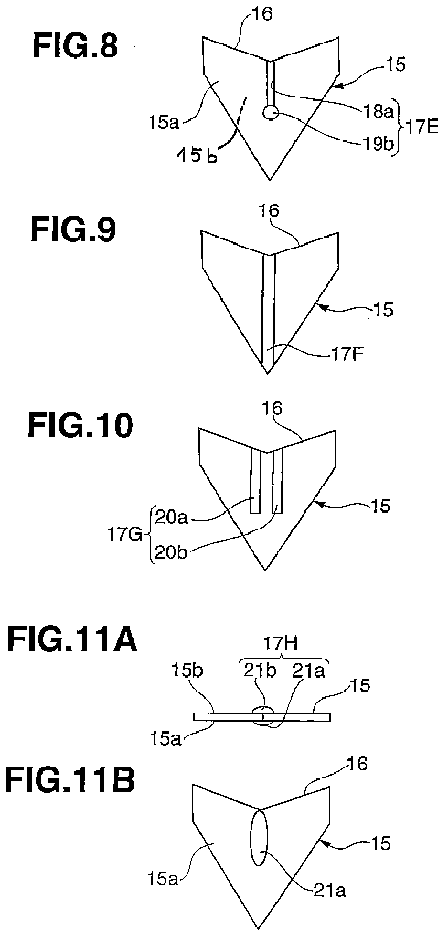

Fig. 8 illustrates an example in which an application liquid release portion 17E is formed from a vertically long groove 18a formed at the center of a surface of the lower holding portion 15 and a hole 19b linked to the lower end of the long groove 18a and being open to obverse and reverse surfaces 15a and 15b of the lower holding portion 15. The other components are almost the same as those of the lower holding portion 15 shown in Figs. 3A to 3C.

Fig. 9 illustrates an example in which an application liquid release portion 17F is formed as a long groove running from the upper end to the lower end at the center of a surface of the lower holding portion 15. The other components are almost the same as those of the lower holding portion 15 shown in Figs. 3A to 3C.

Fig. 10 illustrates an example in which an application liquid release portion 17G is formed from a pair of left and right vertically long grooves 20a and 20b formed at the center of a surface of the lower holding portion 15. The upper ends of the long grooves 20a and 20b are open to the support surfaces 16. The other components are almost the same as those of the lower holding portion 15 shown in Figs. 3A to 3C.

Figs. 11A and 11B illustrate an example in which an application liquid release portion 17H is formed from vertical elliptical projections 21a and 21b projecting at the centers of the obverse and reverse surfaces 15a and 15b of the lower holding portion 15. The upper ends of the projections 21a and 21b are connected to the support surfaces 16. The other components are almost the same as those of the lower holding portion 15 shown in Figs. 3A to 3C.

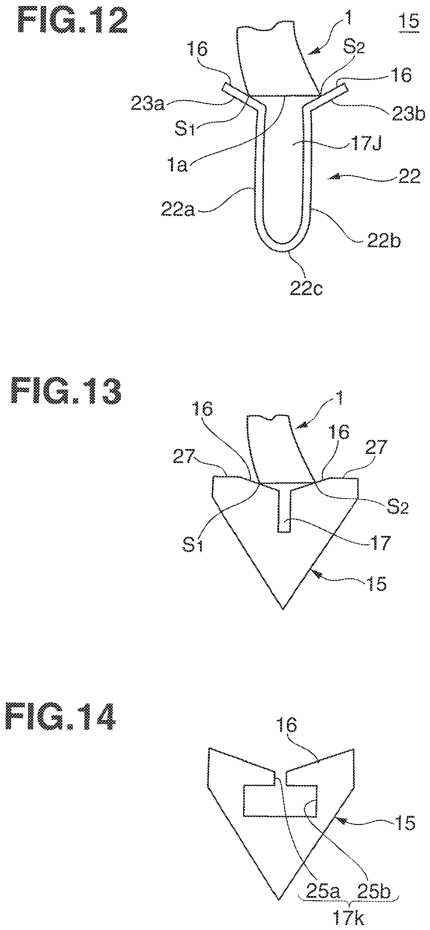

Fig. 12 illustrates the lower holding portion 15 formed from a wire rod. The lower holding portion 15 includes a main body wire rod portion 22 and a pair of left and right lower edge support wire rod portions 23a and 23b running from the two ends of the main body wire rod portion 22. The main body wire rod portion 22 is formed into a U shape including two vertical pieces 22a and 22b that are almost parallel and an arc-shaped connection piece 22c that connects the lower ends of the vertical pieces 22a and 22b. The space surrounded by the vertical pieces 22a and 22b and the connection piece 22c forms an application liquid release portion 17J. The pair of left and right lower edge support wire rod portions 23a and 23b obliquely run outward from the upper ends of the vertical pieces 22a and 22b, respectively, such that the upper surfaces form the support surfaces 16 that receive and support the lower edges S1 and S2 of the cut end surface 1a of the lens base material 1.

Fig. 13 illustrates an example in which the upper surface of the lower holding portion 15 includes the support surfaces 16 that support the lower edges S1 and S2 of the lens base material 1 at two points, and horizontal surfaces 27 each provided on one side of a corresponding support surface 16. The other components are almost the same as those of the lower holding portion 15 shown in Figs. 3A to 3C.

Fig. 14 illustrates an example in which an application liquid release portion 17K of the lower holding portion 15 is formed from a narrow hole 25a formed at the center of the support surfaces 16, and a horizontal long hole 25b (or long groove) communicating with the lower end of the hole 25a. The other components are almost the same as those of the lower holding portion 15 shown in Figs. 3A to 3C.

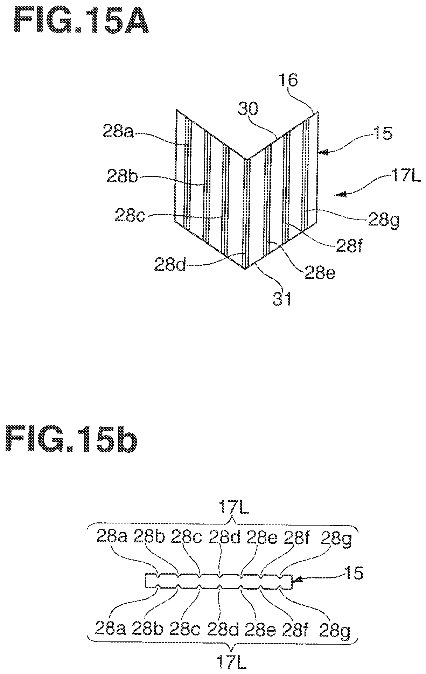

Figs. 15A and 15B illustrate an example in which the lower holding portion 15 is formed from a chevron-shaped thin metal piece (plate) in bilateral symmetry when viewed from the front. Hence, the lower holding portion 15 has vertical side surfaces on the left and right sides, a V-shaped concave portion 30 on the upper surfaces 16, a V-shaped convex portion 31 projecting to the lower surface, and application liquid release portions 17L formed on the obverse and reverse surfaces. The application liquid release portion 17L includes a plurality of long grooves 28a to 28g formed at a predetermined interval in the widthwise direction of the lower holding portion 15 and running along the full length of the lower holding portion 15 in the height direction. The long grooves 28a to 28g are preferably formed as V-shaped grooves having a groove width of about 1 mm and an interval of 1 to 2 mm.

A method of manufacturing a lens base material using the above-described lens holding jig 3 will be explained next.

First, a lens base material 1 to which the application liquid 2 is to be applied and the lens holding jig 3 shown in Fig. 1 are prepared. Then, the operation lever 12 of the second arm 6B of the lens holding jig 3 is made to pivot counterclockwise against the twisted coil spring 11 in Fig. 1 to open the second arm 6B and make the interval between the first side holding portion 8 and the second side holding portion 9 larger than the outer diameter of the lens base material 1. In this state, the lens base material 1 is inserted between the holding portions 8, 9, and 15 of the first arm 6A, the second arm 6B, and the third arm 6C, and the lower end is placed on the support surfaces 16 of the lower holding portion 15 of the third arm 6C. In this state, the operation lever 12 is made to gradually pivot in the direction opposite to that described above to close the second arm 6B so that the first side holding portion 8 of the first arm 6A and the second side holding portion 9 of the second arm 6B hold the left and right edges of the lens base material 1 by the biasing force of the twisted coil spring 11. The lens base material 1 is thus held by the first side holding portion 8 of the first arm 6A, the second side holding portion 9 of the second arm 6B, and the lower holding portion 15 of the third arm 6C and immersed in the application liquid 2 in this state together with the lens holding jig 3.

When immersing the lens base material 1 in the application liquid 2, the lens base material 1 is immersed in the application liquid 2 to such a depth that forms no closed space between the lens holding jig 3 and the lens base material 1 in the application liquid 2. That is, when the lens holding jig 3 is deeply immersed in the application liquid 2 to submerge the holding jig main body 5 in it, the cut end surface 1a of the lens base material 1, the first arm 6A, the second arm 6B, the third arm 6C, and the holding jig main body 5 form a closed space in the application liquid 2. For this reason, when the lens holding jig 3 is pulled up to withdraw the lens base material 1 from the application liquid 2, a film of the application liquid 2 is formed in the closed space. If this film bursts, some of the droplets stick to the cut end surface 1a or the optical surfaces 1b and 1c of the lens base material 1 to form an uneven film thickness, resulting in a defective. To prevent this, the immersion depth of the lens base material 1 in the application liquid 2 is controlled to such a depth that forms no closed space between the lens base material 1, the first arm 6A, the second arm 6B, the third arm 6C, and the holding jig main body 5 in the application liquid 2. That is, the application is performed while immersing the lens base material 1 completely and only the lower half portions of the first arm 6A, the second arm 6B, and the third arm 6C in the application liquid 2 without immersing the holding jig main body 5 in it. In this immersion, no closed space is formed by the lens base material 1, the first arm 6A, the second arm 6B, the third arm 6C, and the holding jig main body 5 in the application liquid 2. Since no film is formed when the lens holding jig 3 is pulled up from the application liquid 2, any defective caused by burst of a film can be prevented.

After confirming that the lens base material 1 is completely immersed in the application liquid 2, the lens holding jig 3 is raised from the application liquid 2 at a withdraw speed of about 200 to 350 mm/min to withdraw the lens base material 1 from the application liquid 2. Upon withdrawing the lens base material 1 from the application liquid 2, the application liquid 2 sticking to the lens base material 1 runs down on the optical surfaces 1b and 1c due to gravitation and sticks to the lower holding portion 15.

In this case, on the conventional lens holding jig that includes no application liquid release portion 17, the application liquid 2 collects in the closed space 19 formed between the cut end surface 1a and the support surfaces 16 of the lower holding portion 15. If the application liquid solidifies in this state, the coating layer is thicker at the lower edge of the cut end surface 1a than at other portions.

In the present invention, however, since there is provided the application liquid release portion 17 running downward from the center of the support surfaces 16, the application liquid 2 which may otherwise collect in the closed space 19 between the cut end surface 1a and the support surfaces 16 can further be guided downward by the application liquid release portion 17. Since no application liquid 2 collects in the closed space 19, the application liquid 2 applied to the cut end surface 1a and that running down from the closed space 19 to the application liquid release portion 17 can be separated. Hence, the application liquid 2 is applied to the cut end surface 1a in a predetermined film thickness without being affected by the application liquid remaining in the closed space 19.

After precure, the lens base material 1 is heated to a predetermined temperature for a predetermined time to completely solidify the application liquid 2. With this process, a hard coat layer is formed on, for example, the cut end surface 1a and the optical surfaces 1b and 1c of the lens base material 1.

After formation of the hard coat layer, the lens base material 1 is detached from the lens holding jig 3. The lower edge of the cut end surface 1a of the lens base material 1, which was held by the lower holding portion 15 of the third arm 6C, is visually inspected, and the film thickness of the hard coat layer is evaluated based on the criterion for evaluation. If the film thickness is equal to or more than the criterion for evaluation, the lens base material is determined as a non-defective. If the film thickness is below the criterion for evaluation, the lens base material is determined as a non-defective. The manufacture of the lens base material 1 thus ends.

[Example] Experiments were conducted in which a hard coat liquid (Ne = 1.6 available from HOYA) for base material was applied to lens base materials 1 using the lens holding jig 3 according to the present invention shown in Figs. 3A to 3C (Examples 1 to 6) and a conventional lens holding jig including no application liquid release portion 17 of the present invention (Comparative Examples 1 to 6). Table 1 shows the evaluation result concerning the presence/absence of film burst and the residue on the cut end.

The experiments were carried out using four kinds of lens holding jigs 3 manufactured by forming a vertically long hole serving as an application liquid release portion 17 and setting a cutting depth D to 5 mm and 10 mm, a cutting width W to 1 mm and 2 mm, and an opening angle α of holding surfaces 16 to 90° and 120°. The components of the conventional lens holding jig are the same as those of the lens holding jig 3 according to the present invention except that the above-described application liquid release portion 17 is not provided on the lower holding portion.

**[Table 1]**

| | Cutting depth D (mm) | Cutting width W (mm) | Opening angle of support surfaces (°) | Film burst | Residue on cut end |
|---|---|---|---|---|---|
| Example 1 | 5 | 1 | 90 | ○ | ○ |
| Example 2 | 5 | 2 | 90 | ○ | ○ |
| Example 3 | 5 | 2 | 120 | ○ | ⊚ |
| Example 4 | 10 | 1 | 90 | ○ | ○ |
| Example 5 | 10 | 2 | 90 | ○ | ○ |
| Example 6 | 10 | 2 | 120 | ○ | ⊚ |
| Comparative Example 1 | 0 | 0 | 90 | × | × |
| Comparative Example 2 | 0 | 0 | 90 | × | × |
| Comparative Example 3 | 0 | 0 | 120 | × | × |
| Comparative Example 4 | 0 | 0 | 90 | × | × |
| Comparative Example 5 | 0 | 0 | 90 | × | × |
| Comparative Example 6 | 0 | 0 | 120 | × | × |

| | | | | | |
|---|---|---|---|---|---|
| Residue on the cut end ⊚ : completely removed ○: rarely remained ×: remained in thick linear form Film burst ○: no failure ×: traces of droplet scattering | | | | | |

As is apparent from Table 1, it was confirmed that film burst and residue on the cut end occurred in Comparative Examples 1 to 6, although neither film burst nor residue on the cut end occurred in Examples 1 to 6. This is supposed to be in itself the effect of providing the application liquid release portion 17.

## Claims

1. A lens holding jig comprising:
a first arm (6A), a second arm (6B), and a third arm (6C) disposed on both sides of a lens base material (1) to be held;
a first side holding portion and a second side holding portion (8, 9) provided at lower ends of said first arm and said second arm, respectively, to hold left and right edges of a cut end surface (1a) of the lens base material; and
a lower holding portion (15) provided on said third arm to hold a lower edge of the cut end surface of the lens base material,
whereby, when applying an application liquid (2) to the lens base material (1), said first side holding portion (8), said second side holding portion (9), and said lower holding portion (15) are immersed in the application liquid together with said first arm (6A), said second arm (6B), and said third arm (6c),
wherein said lower holding portion comprises a V-shaped upper surface forming support surfaces (16) that support lower edges of the cut end surface of the lens base material at two points in a direction perpendicular to optical surfaces (1b, 1c) of the lens base material, and
**characterized by** an application liquid release portion (17) running vertically downward from said V-shaped support surfaces, said application liquid release portion (17) having its upper end open to the support surfaces and being open to the obverse and reverse surfaces (15a, 15b) of said lower holding portion.

2. A lens holding jig according to claim 1, wherein said lower holding portion is formed from a plate, and said application liquid release portion communicates with an inverted triangle shape (19) formed between said support surfaces and the cut end surface of the lens base material, through the upper end of said application liquid release portion.

3. A lens holding jig according to claim 1, wherein said application liquid release portion (17) includes a long groove.

4. A lens holding jig according to claim 1, wherein said application liquid release portion (17) includes a long hole.

5. A lens holding jig according to claim 1, wherein said application liquid release portion (17) includes a long groove formed in one of the obverse surface and the reverse surface of said lower holding portion (15), and a hole linked to a lower end of the long groove and being open to the obverse surface and the reverse surface of said lower holding portion (15).

6. A lens holding jig according to claim 1, wherein said application liquid release portion (17) includes a vertically long projection.

7. A lens holding jig according to claim 1, wherein said lower holding portion (15) is formed from a wire rod, and comprises a main body wire rod portion that forms said application liquid release portion (17), and lower edge support wire rod portions that support the lower edges of the cut end surface of the lens base material (1) at two points.

8. A lens holding jig according to claim 1, wherein said first arm (6A) and said second arm (6B) are arranged to oppose each other, and at least one of said first arm and said second arm freely opens/closes with respect to the other and is biased in a closing direction by biasing means.

9. A lens holding jig according to claim 1, wherein the lens base material (1) is immersed in the application liquid to such a depth that forms no closed space with respect to said lens holding jig in the application liquid.

10. A lens holding jig according to claim 1, wherein the lens base material (1) includes a plastic lens.

## Patentansprüche

1. Linsenhaltelehre, umfassend:
einen ersten Arm (6A), einen zweiten Arm (6B) und einen dritten Arm (6C), die auf beiden Seiten eines zu haltenden Linsenbasismaterials (1) angeordnet sind;
einen ersten Seitenhaltebereich und einen zweiten Seitenhaltebereich (8, 9), die an unteren Enden des ersten Arms beziehungsweise des zweiten Arms vorgesehen sind, um linke und rechte Ränder einer geschnittenen Endoberfläche (1a) des Linsenbasismaterials zu halten; und
einen unteren Haltebereich (15), der an dem dritten Arm vorgesehen ist, um einen unteren Rand der geschnittenen Endoberfläche des Linsenbasismaterials zu halten,
wobei beim Aufbringen einer Aufbringungsflüssigkeit (2) auf das Linsenbasismaterial (1) der erste Seitenhaltebereich (8), der zweite Seitenhaltebereich (9) und der untere Haltebereich (15) in die Aufbringungsflüssigkeit zusammen mit dem ersten Arm (6A), dem zweiten Arm (6B) und dem dritten Arm (6C) eingetaucht werden,
wobei der untere Haltebereich eine V-förmige obere Oberfläche umfasst, die Tragoberflächen (16) bildet, die untere Ränder der geschnittenen Endoberfläche des Linsenbasismaterials an zwei Punkten in einer Richtung orthogonal zu optischen Oberflächen (1b, 1c) des Linsenbasismaterials tragen, und
**gekennzeichnet durch** einen Aufbringungsflüssigkeitsfreisetzbereich (17), der vertikal abwärts von den V-förmigen Tragoberflächen verläuft, wobei der Aufbringungsflüssigkeitsfreisetzbereich (17) ein oberes Ende hat, das zu den Tragoberflächen hin offen ist, und zu den vorderen und hinteren Oberflächen (15a, 15b) des unteren Haltebereichs hin offen ist.

2. Linsenhaltelehre nach Anspruch 1, wobei der untere Haltebereich aus einer Platte gebildet ist, und wobei der Aufbringungsflüssigkeitsfreisetzbereich durch das obere Ende des Aufbringungsflüssigkeitsfreisetzbereichs hindurch mit einer invertierten Dreiecksgestalt (19) kommuniziert, die zwischen den Tragoberflächen und der geschnittenen Endoberfläche des Linsenbasismaterials gebildet ist.

3. Linsenhaltelehre nach Anspruch 1, wobei der Aufbringungsflüssigkeitsfreisetzbereich (17) eine lange Rinne umfasst.

4. Linsenhaltelehre nach Anspruch 1, wobei der Aufbringungsflüssigkeitsfreisetzbereich (17) ein langes Loch umfasst.

5. Linsenhaltelehre nach Anspruch 1, wobei der Aufbringungsflüssigkeitsfreisetzbereich (17) eine lange Rinne umfasst, die in der vorderen Oberfläche oder der hinteren Oberfläche des unteren Haltebereichs (15) gebildet ist, sowie ein Loch, das mit einem unteren Ende der langen Rinne verbunden ist und zu der vorderen Oberfläche und der hinteren Oberfläche des unteren Haltebereichs (15) hin offen ist.

6. Linsenhaltelehre nach Anspruch 1, wobei der Aufbringungsflüssigkeitsfreisetzbereich (17) einen vertikal langen Vorsprung umfasst.

7. Linsenhaltelehre nach Anspruch 1, wobei der untere Haltebereich (15) aus einem Drahtstab gebildet ist und einen Hauptkörperdrahtstab umfasst, der den Aufbringungsflüssigkeitsfreisetzbereich (17) bildet, sowie Unterer-Rand-Tragdrahtstabbereiche, die die unteren Ränder der geschnittenen Endoberfläche des Linsenbasismaterials (1) an zwei Punkten tragen.

8. Linsenhaltelehre nach Anspruch 1, wobei der erste Arm (6A) und der zweite Arm (6B) zueinander entgegengesetzt angeordnet sind, und sich wenigstens einer von dem ersten Arm und dem zweiten Arm frei bezüglich des anderen öffnet/schließt und in einer Schließrichtung durch Vorspannmittel vorgespannt ist.

9. Linsenhaltelehre nach Anspruch 1, wobei das Linsenbasismaterial (1) in die Aufbringungsflüssigkeit bis zu einer derartigen Tiefe eingetaucht ist, dass kein geschlossener Raum bezüglich der Linsenhaltelehre in der Aufbringungsflüssigkeit gebildet ist.

10. Linsenhaltelehre nach Anspruch 1, wobei das Linsenbasismaterial (1) eine Kunststofflinse umfasst.

## Revendications

1. Bâti de maintien de lentille comprenant :
un premier bras (6A), un deuxième bras (6B) et un troisième bras (6C) disposés des deux côtés d'un matériau de base de lentille (1) à maintenir ;
une première partie latérale de maintien et une seconde partie latérale de maintien (8, 9) prévues au niveau des extrémités inférieures dudit premier bras et dudit deuxième bras, respectivement, pour maintenir les bords gauche et droit d'une surface d'extrémité coupée (1a) du matériau de base de lentille ; et
une partie inférieure de maintien (15) prévue sur ledit troisième bras pour maintenir un bord inférieur de la surface d'extrémité coupée du matériau de base de lentille,
moyennant quoi, lorsque l'on applique un liquide d'application (2) sur le matériau de base de lentille (1), ladite première partie latérale de maintien (8), ladite seconde partie latérale de maintien (9) et ladite partie inférieure de maintien (15) sont immergées dans le liquide d'application conjointement avec ledit premier bras (6A), ledit deuxième bras (6B) et ledit troisième bras (6c),
dans lequel ladite partie inférieure de maintien comprend une surface supérieure en forme de V formant des surfaces de support (16) qui supportent des bords inférieurs de la surface d'extrémité coupée du matériau de base de lentille, au niveau de deux points dans une direction perpendiculaire aux surfaces optiques (1b, 1c) du matériau de base de lentille, et
**caractérisé par** une partie de libération de liquide d'application (17) s'étendant verticalement vers le bas à partir desdites surfaces de support en forme de V, ladite partie de libération de liquide d'application (17) ayant son extrémité supérieure ouverte sur les surfaces de support et étant ouverte sur les surfaces d'avers et de revers (15a, 15b) de ladite partie inférieure de maintien.

2. Bâti de maintien de lentille selon la revendication 1, dans lequel ladite partie inférieure de maintien est formée d'une plaque, et ladite partie de libération de liquide d'application communique avec une forme de triangle inversé (19) formée entre lesdites surfaces de support et la surface d'extrémité coupée du matériau de base de lentille, à travers l'extrémité supérieure de ladite partie de libération de liquide d'application.

3. Bâti de maintien de lentille selon la revendication 1, dans lequel ladite partie de libération de liquide d'application (17) comprend une longue rainure.

4. Bâti de maintien de lentille selon la revendication 1, dans lequel ladite partie de libération de liquide d'application (17) comprend un trou long.

5. Bâti de maintien de lentille selon la revendication 1, dans lequel ladite partie de libération de liquide d'application (17) comprend une longue rainure formée dans l'une parmi la surface d'avers et la surface de revers de ladite partie inférieure de maintien (15), et un trou relié à une extrémité inférieure de la longue rainure et ouvert sur la surface d'avers et la surface de revers de ladite partie inférieure de maintien (15).

6. Bâti de maintien de lentille selon la revendication 1, dans lequel ladite partie de libération de liquide d'application (17) comprend une saillie verticalement longue.

7. Bâti de maintien de lentille selon la revendication 1, dans lequel ladite partie inférieure de maintien (15) est formée d'une tige de fil, et comprend une partie de tige de fil de corps principal qui forme ladite partie de libération de liquide d'application (17), et des parties de tige de fil de support de bord inférieur qui supportent les bords inférieurs de la surface d'extrémité coupée du matériau de base de lentille (1) au niveau de deux points.

8. Bâti de maintien de lentille selon la revendication 1, dans lequel ledit premier bras (6A) et ledit deuxième bras (6B) sont agencés à l'opposé l'un de l'autre, et au moins l'un parmi ledit premier bras et ledit second bras s'ouvre/se ferme librement par rapport à l'autre et est sollicité dans une direction de fermeture par des moyens de sollicitation.

9. Bâti de maintien de lentille selon la revendication 1, dans lequel le matériau de base de lentille (1) est immergé dans le liquide d'application jusqu'à une profondeur telle qu'il ne forme aucun espace fermé relativement audit bâti de maintien de lentille dans le liquide d'application.

10. Bâti de maintien de lentille selon la revendication 1, dans lequel le matériau de base de lentille (1) comprend une lentille en plastique.
